# EUROPEAN PATENT APPLICATION

(11) **EP 2 602 665 A2**
(43) Date of publication of application: **12.06.2013**
(21) Application number: 12194108.2
(22) Date of filing: 23.11.2012
(51) Int. Cl.: G03G 15/00

(54) **Control device and electronic apparatus**

(30) Priority: 08.12.2011 JP 2011269023
(71) Applicant: Ricoh Company Ltd., Tokyo 143-8555 (JP)
(72) Inventor: Takiguchi, Akira, Tokyo 143-8555 (JP)
(74) Representative: Leeming, John Gerard

(57) **Abstract**

A control device according to the present invention includes a first control unit (55) configured to control supply and stop of electric power from a power supply to a processing unit (10) that performs processing, a switching unit configured to switch to an electrical continuity state or an electrical discontinuity state between a power supply wire to which the electric power from the power supply is supplied and the first control unit (55), and a second control unit (57) configured to control, if the first control unit (55) stops power supply from the power supply to the processing unit (10), the switching unit so as to achieve the electrical discontinuity state and controls, if a return factor indicating a factor to return to the electrical continuity state is input in the electrical discontinuity state, the switching unit so as to make the electrical continuity state.

## Description

The present invention relates to a control device and an electronic apparatus.

Conventionally, various technologies for reducing power consumption of electronic apparatuses are widely known. Japanese Patent Application Laid-open No. H11-126000, for example, discloses an image forming system having a normal mode in which processing, such as printing, can be performed and an energy-saving mode in which processing, such as printing, is not performed and less power is consumed than in the normal mode. The image forming system disclosed in Japanese Patent Application Laid-open No. H11-126000 includes a power supply control unit that controls a shift from the normal mode to the energy-saving mode and a return from the energy-saving mode to the normal mode.

If the power supply control unit disclosed in Japanese Patent Application Laid-open No. H11-126000 detects that a main power supply switch is pressed in the normal mode, the power supply control unit performs control for stopping power supply from a power supply to a main controller, an engine unit, and a scanner unit, thereby shifting to the energy-saving mode. By contrast, if any one of a plurality of return conditions is satisfied in the energy-saving mode, the power supply control unit disclosed in Japanese Patent Application Laid-open No. H11-126000 resumes power supply from the power supply to the main controller, the engine unit, and the scanner unit, thereby returning to the normal mode. The power supply control unit disclosed in Japanese Patent Application Laid-open No. H11-126000 manages a power-on register including information indicating whether each of the return conditions is satisfied and information indicating whether the whole system starts and performs control for updating the power-on register in accordance with the latest state (referred to as "register control").

In the energy-saving mode, power consumption of an electronic apparatus (the image forming system in Japanese Patent Application Laid-open No. H11-126000) is ideally closer to 0W as much as possible. To return to the normal mode, however, power supply to the power supply control unit needs to be continued. To reduce power consumption of the power supply control unit as much as possible, it is preferable that the power supply control unit have only the minimum function. The power supply control unit disclosed in Japanese Patent Application Laid-open No. H11-126000, however, has a function to perform the register control described above in addition to the function to control start and stop of power supply from the power supply to the main controller, the engine unit, and the scanner unit. As a result, the power consumption of the power supply control unit cannot be sufficiently reduced.

Furthermore, if a return condition is satisfied in the energy-saving mode, the power supply control unit disclosed in Japanese Patent Application Laid-open No. H11-126000 resumes power supply from the power supply to the main controller, the engine unit, and the scanner unit. Therefore, even if processing, such as printing, is not performed in a certain period of time from the return, electric power is supplied to the engine unit and the scanner unit just after the return. As a result, unnecessary power is consumed.

In view of the disadvantages described above, there is need to provide a control device and an electronic apparatus that can realize further reduction in power consumption.

It is an aim of the present invention to at least partially solve the problems in the conventional technology.

According to the present invention, there is provided: a control device comprising: a first control unit configured to control supply and stop of electric power from a power supply to a processing unit that performs processing; a switching unit configured to switch to an electrical continuity state or an electrical discontinuity state between a power supply wire to which the electric power from the power supply is supplied and the first control unit; and a second control unit configured to control, when the first control unit stops power supply from the power supply to the processing unit, the switching unit so as to achieve the electrical discontinuity state and control, when a return factor indicating a factor to return to the electrical continuity state is input in the electrical discontinuity state, the switching unit so as to make the electrical continuity state.

The invention also provides an electronic apparatus comprising the control device mentioned above.

The invention also provides an image forming apparatus including an image forming unit configured to form an image on a medium and a control device configured to control power supplying to the image forming unit.

In the above-mentioned image forming apparatus, the control device may comprise: a first control unit configured to control supply and stop of electric power from a power supply to the image forming unit; a switching unit configured to switch to an electrical continuity state or an electrical discontinuity state between a power supply wire to which the electric power from the power supply is supplied and the first control unit; and a second control unit configured to control, when the first control unit stops power supply from the power supply to the image forming unit, the switching unit so as to achieve the electrical discontinuity state and control, when a return factor indicating a factor to return to the electrical continuity state is input in the electrical discontinuity state, the switching unit so as to make the electrical continuity state.

The above and other objects, features, advantages and technical and industrial significance of this invention will be better understood by reading the following detailed description of presently preferred embodiments of the invention, when considered in connection with the accompanying drawings, in which:
Fig. 1 is a block diagram of an exemplary configuration of an image forming apparatus according to a first embodiment of the present invention;
Fig. 2 is a schematic of states to which a main controller can be shifted;
Fig. 3 is a sequence diagram of an example of a process of a processing operation performed by the main controller;
Fig. 4 is a block diagram of an exemplary configuration of an image forming apparatus according to a second embodiment of the present invention;
Fig. 5 is a sequence diagram of an example of a process of a processing operation performed by the main controller;
Fig. 6 is another sequence diagram of an example of a process of a processing operation performed by the main controller;
Fig. 7 is still another sequence diagram of an example of a process of a processing operation performed by the main controller;
Fig. 8 is still another sequence diagram of an example of a process of a processing operation performed by the main controller;
Fig. 9 is a schematic of a truth table of control performed by a low-power microcomputer; and
Fig. 10 is a flowchart of an example of a processing operation performed by the low-power microcomputer.

Exemplary embodiments of a control device and an electronic apparatus according to the present invention are described below in greater detail with reference to the accompanying drawings. While an image forming apparatus having a function to form an image on a medium is explained as an example of the electronic apparatus in the embodiments below, the electronic apparatus is not limited thereto. Any type of electronic apparatus can be employed.

### First Embodiment

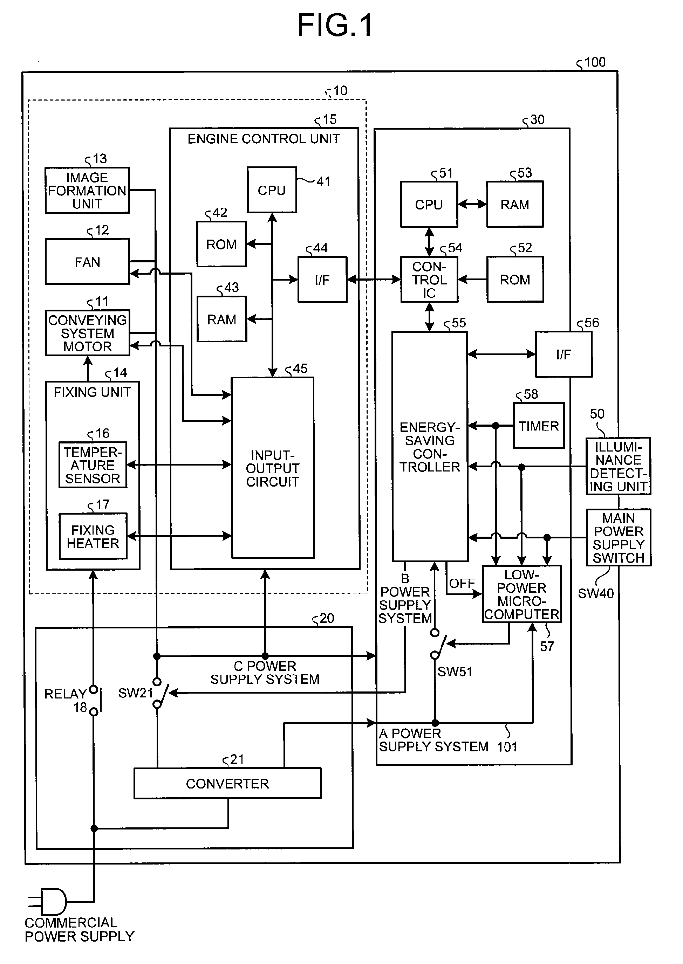

Fig. 1 is a block diagram of an exemplary schematic configuration of an image forming apparatus 100 according to a first embodiment of the present invention. As illustrated in Fig. 1, the image forming apparatus 100 includes an image forming unit 10, a power supply unit (PSU) 20, a main controller 30, a main power supply switch SW40, and an illuminance detecting unit 50.

The image forming unit 10 forms an image on a medium, such as a recording sheet, under the control of the main controller 30. As illustrated in Fig. 1, the image forming unit 10 includes a conveying system motor 11, a fan 12, an image formation unit 13, a fixing unit 14, and an engine control unit 15. The conveying system motor 11 drives a device of a conveying system (e.g., a carriage roller). The fan 12 suppresses an increase in temperature in the apparatus. The image formation unit 13 transfers a toner image (a visualized electrostatic latent image) formed on a photosensitive drum (not illustrated) onto a medium, such as a recording sheet. The fixing unit 14 fixes a toner image onto a medium, such as a recording sheet. The fixing unit 14 includes a temperature sensor 16 and a fixing heater 17. The temperature sensor 16 detects the temperature of a fixing roller (not illustrated). The fixing heater 17 heats the fixing roller.

The engine control unit 15 controls an image forming operation (a printing operation) performed by the image forming unit 10. As illustrated in Fig. 1, the engine control unit 15 is a computer including a central processing unit (CPU) 41, a read-only memory (ROM) 42, a random access memory (RAM) 43, an interface (I/F) 44, and an input-output circuit 45. The CPU 41 executes a predetermined control program stored in the ROM 42 and the like, thereby controlling each unit (the conveying system motor 11, the fan 12, the image formation unit 13, the fixing unit 14, and the engine control unit 15) of the image forming unit 10. The ROM 42 is a non-volatile semiconductor memory and stores therein the control program and various types of data. The RAM 43 is a volatile semiconductor memory that temporarily stores therein various types of data when various types of computer programs stored in the ROM 42 are executed. The I/F 44 connects the engine control unit 15 to the main controller 30. The input-output circuit 45 performs processing for inputting and outputting a signal from and to each of the conveying system motor 11, the fan 12, the image formation unit 13, and the fixing unit 14.

As illustrated in Fig. 1, the PSU 20 includes a converter 21, a switch SW21, and a relay 18. The converter 21 converts alternating-current (AC) voltage supplied from a commercial power supply (an AC power supply) into direct-current (DC) voltage available for the main controller 30 and the image forming unit 10. The switch SW21 intervenes between each of the main controller 30 and the image forming unit 10 and the converter 21. The switch SW21 is turned ON and OFF in response to the control of the main controller 30. If the switch SW21 is turned ON, electric power output from the converter 21 is supplied to the main controller 30, the engine control unit 15, the conveying system motor 11, the fan 12, and the image formation unit 13. By contrast, if the switch SW21 is turned OFF, no electric power output from the converter 21 is supplied to the main controller 30, the engine control unit 15, the conveying system motor 11, the fan 12, and the image formation unit 13. The path through which the electric power output from the converter 21 is supplied to the engine control unit 15 and the main controller 30 via the switch SW21 is referred to as a "C power supply system".

Furthermore, as illustrated in Fig. 1, the relay 18 is arranged on a power supply path through which electric power output from the commercial power supply is supplied to the fixing unit 14 without passing through the converter 21. The relay 18 is turned ON and OFF in response to the control of the main controller 30. If the relay 18 is turned ON, the electric power output from the commercial power supply is supplied to the fixing unit 14. By contrast, if the relay 18 is turned OFF, no electric power output from the commercial power supply is supplied to the fixing unit 14.

The main controller 30 collectively controls the image forming apparatus 100. As illustrated in Fig. 1, the main controller 30 includes a CPU 51, a ROM 52, a RAM 53, a control integrated circuit (IC) 54, an energy-saving controller 55, an I/F 56, a switch SW51, a low-power microcomputer 57, and a timer 58.

The CPU 51 executes a predetermined control program stored in the ROM 52 and the like, thereby controlling the image forming unit 10, the PSU 20, and the main controller 30. The ROM 52 is a non-volatile semiconductor memory and stores therein the control program and various types of data. The RAM 53 is a volatile semiconductor memory that temporarily stores therein various types of data when various types of computer programs stored in the ROM 52 are executed.

The control IC 54 serves as a bridge that connects the CPU 51, the ROM 52, the energy-saving controller 55, and the I/F 44 of the engine control unit 15 to one another. In the example of Fig. 1, the RAM 53 is connected to the CPU 51.

The energy-saving controller 55 is a computer having a different CPU from the CPU 51. The energy-saving controller 55, for example, performs energy-saving control for setting the operating state of the image forming apparatus 100 to an energy-saving mode and main power supply control for controlling supply and stop of electric power to each component constituting the image forming unit 10 by turning ON and OFF the switch SW21 and the relay 18 separately. The energy-saving mode in the present embodiment is a state in which electric power is supplied only to the main controller 30. In the energy-saving mode, the energy-saving controller 55 performs control such that both the switch SW21 and the relay 18 are turned OFF.

The I/F 56 is an interface that connects the main controller 30 to an external apparatus (e.g., a facsimile).

The switch SW51 is arranged between a power supply wire 101 through which the electric power output from the converter 21 (that is, the electric power from the power supply) is supplied and that is not connected to the image forming unit 10 and the energy-saving controller 55. The switch SW51 switches to an electrical continuity state or an electrical discontinuity state between the power supply wire 101 and the energy-saving controller 55 under the control of the low-power microcomputer 57. More specifically, the switch SW51 is turned on to achieve the electrical continuity state, and a power supply path from the power supply wire 101 to the energy-saving controller 55 is formed. As a result, the electric power is supplied from the converter 21 to the energy-saving controller 55, thereby enabling the energy-saving controller 55 to operate. By contrast, the switch SW51 is turned off to achieve the electrical discontinuity state, and the power supply path from the power supply wire 101 to the energy-saving controller 55 is not formed. As a result, no electric power is supplied from the converter 21 to the energy-saving controller 55, thereby causing the energy-saving controller 55 to stop (preventing the energy-saving controller 55 from operating). The power supply path through which the electric power output from the converter 21 is supplied to the energy-saving controller 55 via the power supply wire 101 and the switch SW51 is referred to as a "B power supply system". Furthermore, because the power supply wire 101 1 is directly connected to the low-power microcomputer 57 in the present embodiment, the electric power output from the converter 21 is constantly supplied to the low-power microcomputer 57 unless power supply from the commercial power supply is stopped. The power supply path through which the electric power output from the converter 21 is supplied to the low-power microcomputer 57 via the power supply wire 101 1 is referred to as an "A power supply system".

If the energy-saving controller 55 turns OFF both the switch SW21 and the relay 18 to stop power supply to the image forming unit 10, the low-power microcomputer 57 controls the switch SW51 so as to achieve the electrical discontinuity state. Furthermore, if a return factor indicating a factor to return to the electrical continuity state is input in the electrical discontinuity state, the low-power microcomputer 57 controls the switch SW51 so as to achieve the electrical continuity state. While any return factor can be arbitrarily set, the return factor in the present embodiment is any one of the following factors: an input signal input by pressing the main power supply switch SW40; a signal indicating the fact that the timer 58 detects that resuming time to resume power supply to the energy-saving controller 55 has come; and a signal indicating the fact that the illuminance detecting unit 50 detects that the illuminance of the environment exceeds a predetermined value. Furthermore, in the present embodiment, the states of the low-power microcomputer 57 include the following modes: a "power-OFF" mode in which the "A power supply system" is not formed and power supply to the low-power microcomputer 57 is stopped; an "active" mode in which the "A power supply system" is formed and the switch SW51 can be controlled; and a "sleep" mode in which the "A power supply system" is formed and less power is consumed than in the "active" mode. The operations performed by the low-power microcomputer 57 will be described later in detail.

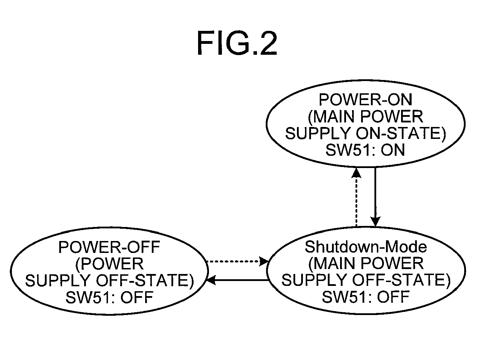

Fig. 2 is a schematic of states to which the main controller 30 can be shifted. As illustrated in Fig. 2, the states to which the main controller 30 can be shifted include a "power-ON" mode, a "shutdown" mode, and a "power-OFF" mode. In the "power-ON" mode, the switch SW51 is turned ON to form the "B power supply system". In the "shutdown" mode, the switch SW51 is turned OFF to form only the "A power supply system" without forming the "B power supply system". In the "power-OFF" mode, connection using an outlet (hereinafter, referred to as an "AC outlet") for connecting the commercial power supply and the image forming apparatus 100 is cancelled, for example, and power supply to the low-power microcomputer 57 is also stopped (neither the "A power supply system" nor the "B power supply system" is formed).

Referring back to Fig. 1, the explanation will be continued. The timer 58 measures time and may have a real-time clock function that counts the current time, for example. Because the timer 58 is constantly supplied with electric power from a battery, which is not illustrated, the timer 58 can continue to operate even in the electrical discontinuity state.

In the present embodiment, if the timer 58 detects that the time to shift to the "power-ON" mode has come, the timer 58 transmits a signal indicating that the time to shift to the "power-ON" mode has come to the low-power microcomputer 57. The low-power microcomputer 57 that receives the signal indicating that the time to shift to the "power-ON" mode has come from the timer 58 controls the switch SW51 so as to achieve the electrical continuity state. As a result, power supply to the energy-saving controller 55 is started, thereby enabling the energy-saving controller 55 to operate. Thus, the energy-saving controller performs the main power supply control.

Furthermore, if the timer 58 detects that the time to shift to the "shutdown" mode has come, the timer 58 transmits a signal indicating that the time to shift to the "shutdown" mode has come to the energy-saving controller 55. The energy-saving controller 55 that receives the signal indicating that the time to shift to the "shutdown" mode has come from the timer 58 turns off the switch SW21 and the relay 18 to perform control for stopping power supply to the image forming unit 10 (an example of the main power supply control). After finishing the main power supply control, the energy-saving controller 55 transmits an OFF signal indicating that power supply to the image forming unit 10 is stopped to the low-power microcomputer 57. The low-power microcomputer 57 that receives the OFF signal from the energy-saving controller 55 controls the switch SW51 so as to achieve the electrical discontinuity state.

The main power supply switch SW40 inputs an input signal serving as a trigger to start or stop power supply to the energy-saving controller 55 by being pressed by a user. The input signal is input to the low-power microcomputer 57 and the energy-saving controller 55. In the present embodiment, if the input signal is input in the electrical continuity state (in the "power-ON" mode), the energy-saving controller 55 turns off the switch SW21 and the relay 18 to perform control for stopping power supply to the image forming unit 10. After finishing the control, the energy-saving controller 55 transmits the OFF signal to the low-power microcomputer 57. The low-power microcomputer 57 that receives the OFF signal from the energy-saving controller 55 controls the switch SW51 so as to achieve the electrical discontinuity state. By contrast, if the input signal is input in the electrical discontinuity state (in the "shutdown" mode), the low-power microcomputer 57 controls the switch SW51 so as to achieve the electrical continuity state. As a result, power supply to the energy-saving controller 55 is started, thereby enabling the energy-saving controller 55 to operate. Thus, the energy-saving controller performs the main power supply control.

The illuminance detecting unit 50 detects the illuminance of the environment. The illuminance detecting unit 50 includes an optical sensor, such as a photodiode, that converts received light into an electrical signal and a control unit, such as a microcomputer, that derives the illuminance based on the signal output from the optical sensor. Similarly to the timer 58, because the illuminance detecting unit 50 is constantly supplied with electric power from a battery, which is not illustrated, the illuminance detecting unit 50 can continue to operate even in the electrical discontinuity state.

In the present embodiment, if the illuminance detecting unit 50 determines that the illuminance of the environment is equal to or lower than a predetermined value, the illuminance detecting unit 50 transmits a signal indicating that the illuminance of the environment is equal to or lower than the predetermined value to the energy-saving controller 55. In the electrical continuity state, the energy-saving controller 55 that receives the signal indicating that the illuminance of the environment is equal to or lower than the predetermined value from the illuminance detecting unit 50 turns off the switch SW21 and the relay 18 to perform control for stopping power supply to the image forming unit 10 (an example of the main power supply control). After finishing the main power supply control, the energy-saving controller 55 transmits the OFF signal to the low-power microcomputer 57. The low-power microcomputer 57 that receives the OFF signal from the energy-saving controller 55 controls the switch SW51 so as to achieve the electrical discontinuity state.

In the present embodiment, if the illuminance of the environment exceeds the predetermined value, the illuminance detecting unit 50 transmits a signal indicating that the illuminance of the environment exceeds the predetermined value to the low-power microcomputer 57. In the electrical discontinuity state, the low-power microcomputer 57 that receives the signal indicating that the illuminance of the environment exceeds the predetermined value from the illuminance detecting unit 50 controls the switch SW51 so as to achieve the electrical continuity state. As a result, power supply to the energy-saving controller 55 is started, thereby enabling the energy-saving controller 55 to operate. Thus, the energy-saving controller performs the main power supply control.

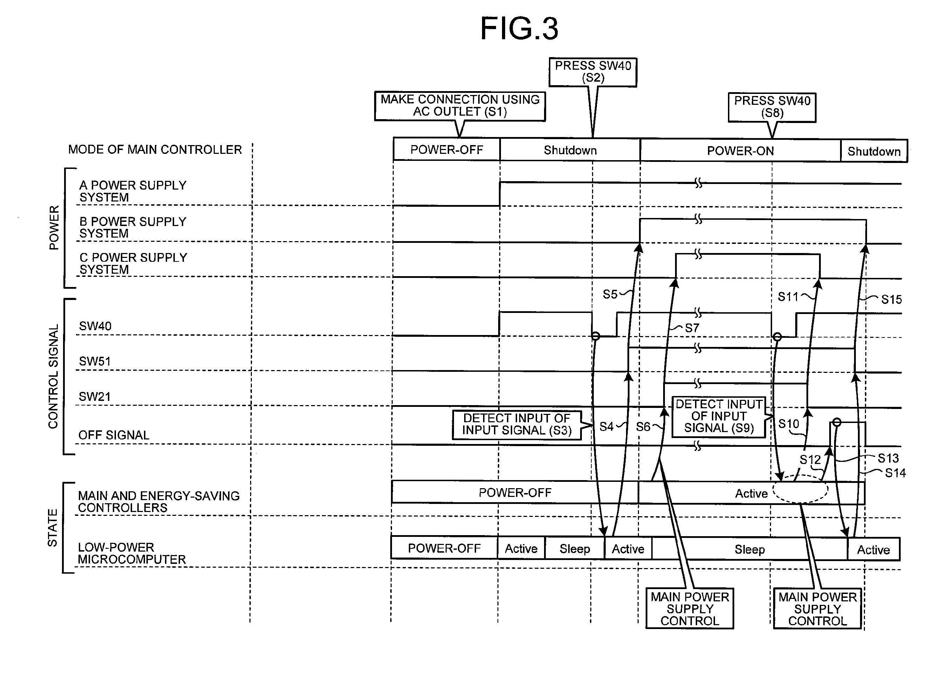

Fig. 3 is a sequence diagram of an example of a process of a processing operation performed by the main controller 30. For convenience of explanation, in the example of Fig. 3, if the "A power supply system" is turned ON (if the "A power supply system" is formed), display of the "A power supply system" is set at a high level. By contrast, if the "A power supply system" is turned OFF (if the "A power supply system" is not formed), display of the "A power supply system" is set at a low level. The same applies to the "B power supply system" and the "C power supply system".

In the example of Fig. 3, if the main power supply switch SW40 is pressed, display of the main power supply switch SW40 is set at a low level. By contrast, if the main power supply switch SW40 is not pressed, display of the main power supply switch SW40 is set at a high level. Furthermore, in the example of Fig. 3, if the switch SW51 is turned ON, display of the switch SW51 is set at a high level. By contrast, if the switch SW51 is turned OFF, display of the switch SW51 is set at a low level. The same applies to the switch SW21.

Furthermore, in the example of Fig. 3, while the energy-saving controller 55 is transmitting the OFF signal to the low-power microcomputer 57, display of the OFF signal is set at a high level. By contrast, while the energy-saving controller 55 is not transmitting the OFF signal to the low-power microcomputer 57, display of the OFF signal is set at a low level. Based on the premise described above, an example of a processing operation performed by the main controller 30 will now be described with reference to Fig. 3.

In the state where the main controller 30 is in the "power-OFF" mode, if connection using the AC outlet is made (S1), the "A power supply system" is turned ON. As a result, the main controller 30 shifts to the "shutdown" mode. In this case, the low-power microcomputer 57 shifts from the "power-OFF" mode to the "active" mode. If a time period during which no control is performed on the switch SW51 continues for a certain period of time, the low-power microcomputer 57 shifts to the "sleep" mode.

After the main controller 30 shifts to the "shutdown" mode, if the main power supply switch SW40 is pressed (S2), the low-power microcomputer 57 receives an input signal generated by the pressing of the main power supply switch SW40. If the low-power microcomputer 57 detects input of the input signal (S3), the low-power microcomputer 57 shifts from the "sleep" mode to the "active" mode and controls the switch SW51 so as to achieve the electrical continuity state (S4). As a result, the "B power supply system" is turned ON (S5), and the main controller 30 shifts from the "shutdown" mode to the "power-ON" mode. Thus, power supply to the energy-saving controller 55 is started, thereby enabling the energy-saving controller 55 to operate. If a time period during which no control is performed on the switch SW51 continues for a certain period of time, the low-power microcomputer 57 that has shifted to the "active" mode shifts to the "sleep" mode.

Subsequently, the energy-saving controller 55 performs the main power supply control. More specifically, the energy-saving controller 55 turns ON the switch SW21 (S6). As a result, the "C power supply system" is turned ON (S7). If the main power supply switch SW40 is pressed in this state (S8), the energy-saving controller 55 receives an input signal generated by the pressing of the main power supply switch SW40. If the energy-saving controller 55 detects input of the input signal (S9), the energy-saving controller 55 performs the main power supply control. More specifically, the energy-saving controller 55 performs control for turning OFF the switch SW21 (S10). As a result, the "C power supply system" is turned OFF (S11), whereby power supply to the image forming unit 10 is stopped.

After finishing the main power supply control described above, the energy-saving controller 55 transmits the OFF signal to the low-power microcomputer 57 (S12). If the low-power microcomputer 57 detects the OFF signal transmitted from the energy-saving controller 55 (S13), the low-power microcomputer 57 shifts from the "sleep" mode to the "active" mode and controls the switch SW51 so as to achieve the electrical discontinuity state (S14). As a result, the "B power supply system" is turned OFF (S15), and the main controller 30 shifts from the "power-ON" mode to the "shutdown" mode.

In the example of Fig. 3, the explanation has been made of the case where the input signal generated by pressing of the main power supply switch SW40 is input as an event to shift states. Even if a signal transmitted from the illuminance detecting unit 50 is input or even if a signal transmitted from the timer 58 is input as an event to shift the states, the same sequence is employed. For this reason, detailed explanations thereof will be omitted.

As described above, in the present embodiment, if the low-power microcomputer 57 receives the OFF signal from the energy-saving controller 55, the low-power microcomputer 57 controls the switch SW51 so as to achieve the electrical discontinuity state. By contrast, if a return factor is input in the electrical discontinuity state, the low-power microcomputer 57 controls the switch SW51 so as to achieve the electrical continuity state. In other words, the low-power microcomputer 57 has only a function to control turning ON and OFF the switch SW51 and does not have a function to perform the register control described above. Therefore, it is possible to further reduce power consumption of the low-power microcomputer 57 compared with the conventional technology. Furthermore, in the present embodiment, if the switch SW51 shifts from the electrical discontinuity state to the electrical continuity state, only the energy-saving controller 55 that controls supply and stop of electric power to the image forming unit 10 starts. Furthermore, the energy-saving controller 55 can perform energy-saving control for setting the operating state of the image forming apparatus 100 to the energy-saving mode until a request for printing is received, for example. Therefore, it is possible to suppress unnecessary power consumption.

### Second Embodiment

A second embodiment of the present invention will now be described. In the present embodiment, if a switch SW51 shifts from the electrical discontinuity state to the electrical continuity state and an energy-saving controller 55 normally starts, the energy-saving controller 55 sets a value of a state signal indicating the state of the energy-saving controller 55 to a first value indicating that the energy-saving controller 55 normally starts. In the present embodiment, the value of the state signal can be set to either of two values of "1" and "0". If the energy-saving controller 55 normally starts, the value of the state signal is set to "1" (the first value). By contrast, if the energy-saving controller 55 does not normally start, the value of the state signal is set to "0". However, the value of the state signal is not limited thereto and may be set to various values depending on the state of the energy-saving controller 55, for example.

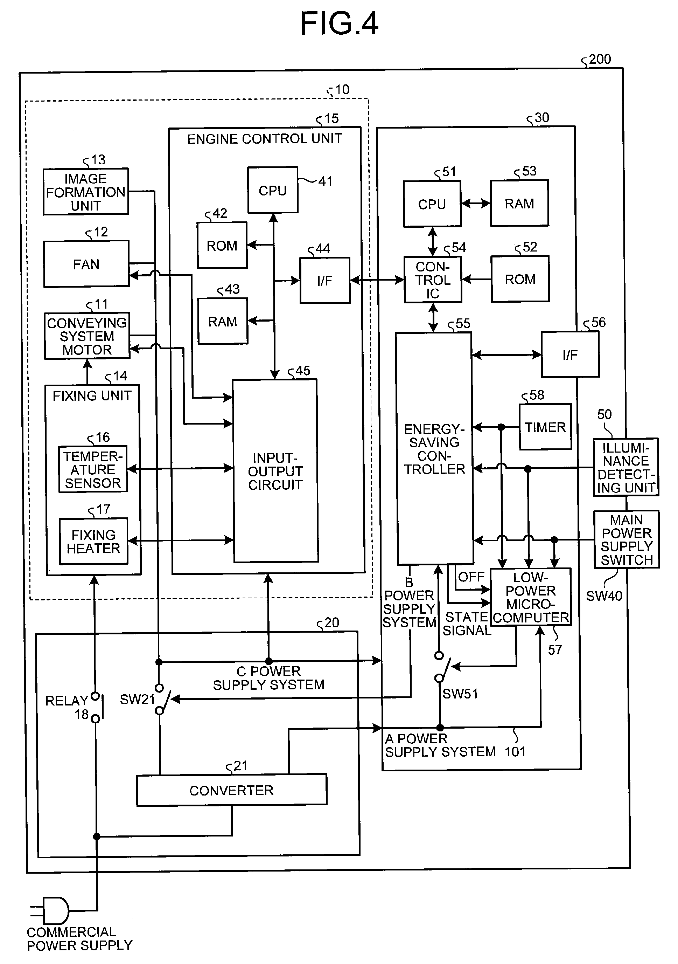

In the present embodiment, the value of the state signal set by the energy-saving controller 55 is transmitted to a low-power microcomputer 57 via an input-output port that inputs and outputs data between the energy-saving controller 55 and the low-power microcomputer 57. However, the value is not necessarily transmitted by this method. A dedicated line that connects the energy-saving controller 55 and the low-power microcomputer 57 may be provided, and a watchdog signal (corresponding to the state signal) may be transmitted to the low-power microcomputer 57 via the dedicated line, for example. In other words, the configuration can be arbitrarily changed as long as the state signal indicating the state of the energy-saving controller 55 is transmitted to the low-power microcomputer 57. Specific contents will be described below. Components common to the first embodiment are denoted by similar reference numerals, and explanations thereof will be omitted as appropriate. Fig. 4 is a block diagram of an exemplary schematic configuration of an image forming apparatus 200 according to the present embodiment.

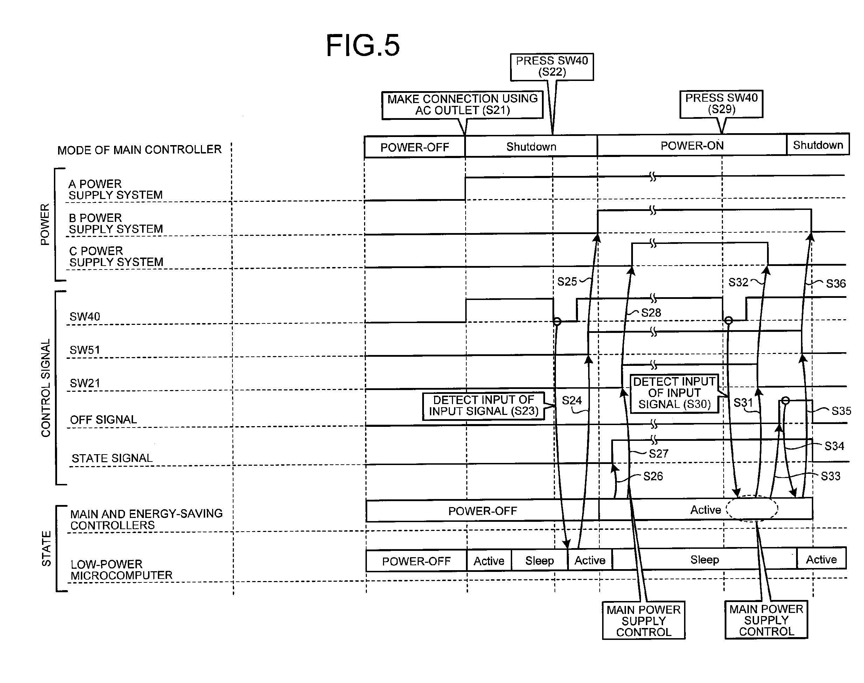

Fig. 5 is a sequence diagram of an example of a process of a processing operation performed by a main controller 30. An example of a processing operation performed by the main controller 30 will now be described with reference to Fig. 5. Because the contents from S21 to S25 in Fig. 5 are the same as those from S1 to S5 in Fig. 3, detailed explanations thereof will be omitted. After S25 in Fig. 5 (after the switch SW51 shifts from the electrical discontinuity state to the electrical continuity state), if the energy-saving controller 55 finishes initialization and normally starts, the energy-saving controller 55 sets the value of the state signal to "1" (S26). The contents from S27 to S36 in Fig. 5 are the same as those from S6 to S15 in Fig. 3. While the value of the state signal is being set to "1", the low-power microcomputer 57 controls the switch SW51 such that switch SW51 maintains the electrical continuity state even if an input signal is input by pressing of the main power supply switch SW40. If the low-power microcomputer 57 detects an OFF signal transmitted from the energy-saving controller 55 (S34), the low-power microcomputer 57 controls the switch SW51 so as to achieve the electrical discontinuity state (S35).

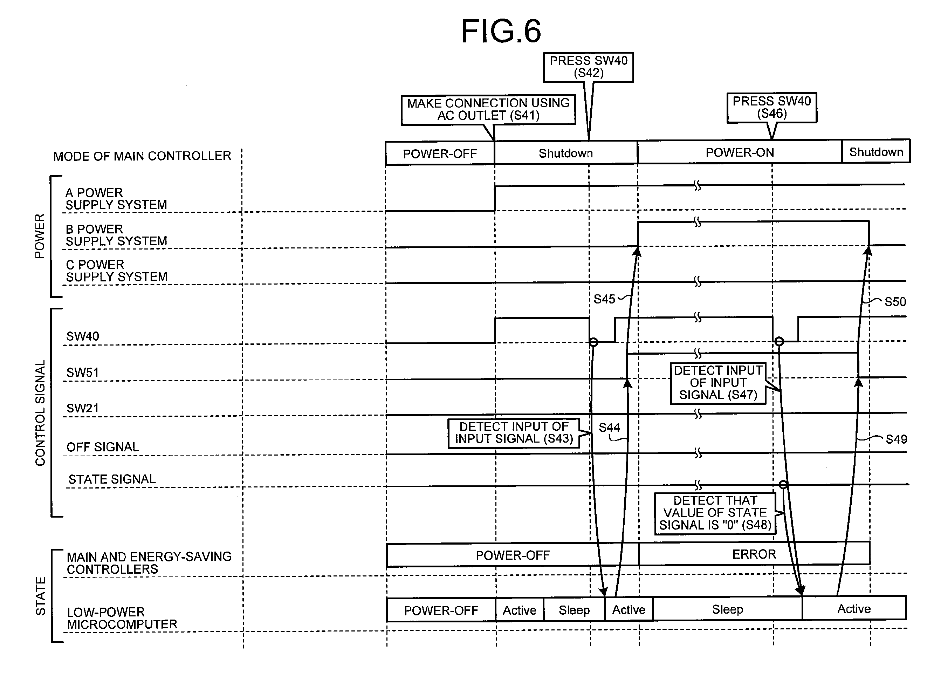

An explanation will be made of a processing operation performed when the switch SW51 shifts from the electrical discontinuity state to the electrical continuity state and the energy-saving controller 55 does not normally start with reference to Fig. 6.

Fig. 6 is a sequence diagram of an example of the processing operation performed by the main controller 30 in this case. Because the contents from S41 to S45 in Fig. 6 are the same as those from S1 to S5 in Fig. 3, detailed explanations thereof will be omitted. After S45 (after the switch SW51 shifts from the electrical discontinuity state to the electrical continuity state), if the energy-saving controller 55 normally starts, the value of the state signal is set to "1". In the example of Fig. 6, however, because the energy-saving controller 55 does not normally start, the value of the state signal remains to be "0". If the main power supply switch SW40 is pressed in this state (S46), an input signal generated by the pressing of the main power supply switch SW40 is input to the energy-saving controller 55 and the low-power microcomputer 57. In this example, the input signal can be considered as a stop signal requesting to stop power supply to the energy-saving controller 55. Instead of pressing of the main power supply switch SW40, if a signal is input from the illuminance detecting unit 50 and if a signal is input from the timer 58 as an event to shift the states, a signal transmitted from the illuminance detecting unit 50 and indicating that the illuminance of the environment is equal to or lower than a predetermined value and a signal transmitted from the timer 58 and indicating that the time to shift to the "shutdown" mode has come, respectively, correspond to the stop signal. If the low-power microcomputer 57 detects input of the input signal (S47) and detects that the value of the state signal is "0" (S48), the low-power microcomputer 57 controls the switch SW51 so as to achieve the electrical discontinuity state (S49). As a result, the "B power supply system" is turned OFF (S50), and the main controller 30 shifts from the "power-ON" mode to the "shutdown" mode.

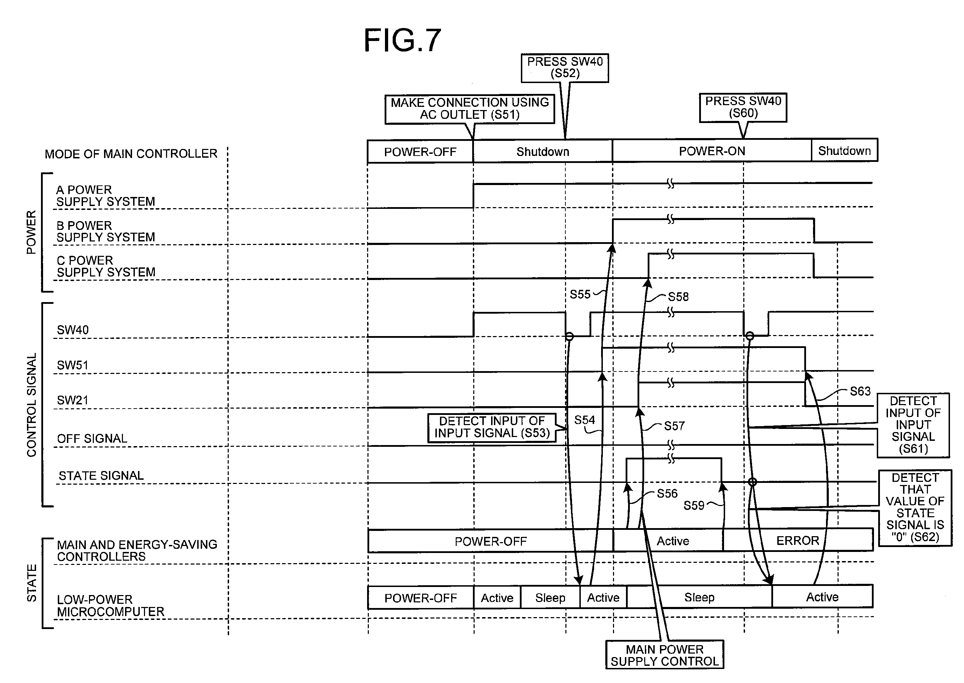

An explanation will be made of a processing operation performed when the switch SW51 shifts from the electrical discontinuity state to the electrical continuity state, the energy-saving controller 55 normally starts, and an error occurs in the energy-saving controller 55 with reference to Fig. 7. Fig. 7 is a sequence diagram of an example of the processing operation performed by the main controller 30 in this case. Because the contents from S51 to S58 in Fig. 7 are the same as those from S21 to S28 in Fig. 5, detailed explanations thereof will be omitted. In the example of Fig. 7, after the switch SW51 shifts from the electrical discontinuity state to the electrical continuity state and the energy-saving controller 55 normally starts (after S58 in Fig. 7), an error occurs in the energy-saving controller 55. The energy-saving controller 55 that detects the error changes the value of the state signal from "1" to "0" (S59). Subsequently, if the main power supply switch SW40 is pressed (S60), an input signal generated by the pressing of the main power supply switch SW40 is input to the energy-saving controller 55 and the low-power microcomputer 57. If the low-power microcomputer 57 detects input of the input signal (S61) and detects that the value of the state signal is "0" (S62), the low-power microcomputer 57 controls the switch SW51 so as to achieve the electrical discontinuity state (S63). As a result, the "B power supply system" is turned OFF. Because power supply to the energy-saving controller 55 is stopped, the switch SW21 and the relay 18 are turned OFF, and the "C power supply system" is turned OFF. Thus, the main controller 30 shifts from the "power-ON" mode to the "shutdown" mode.

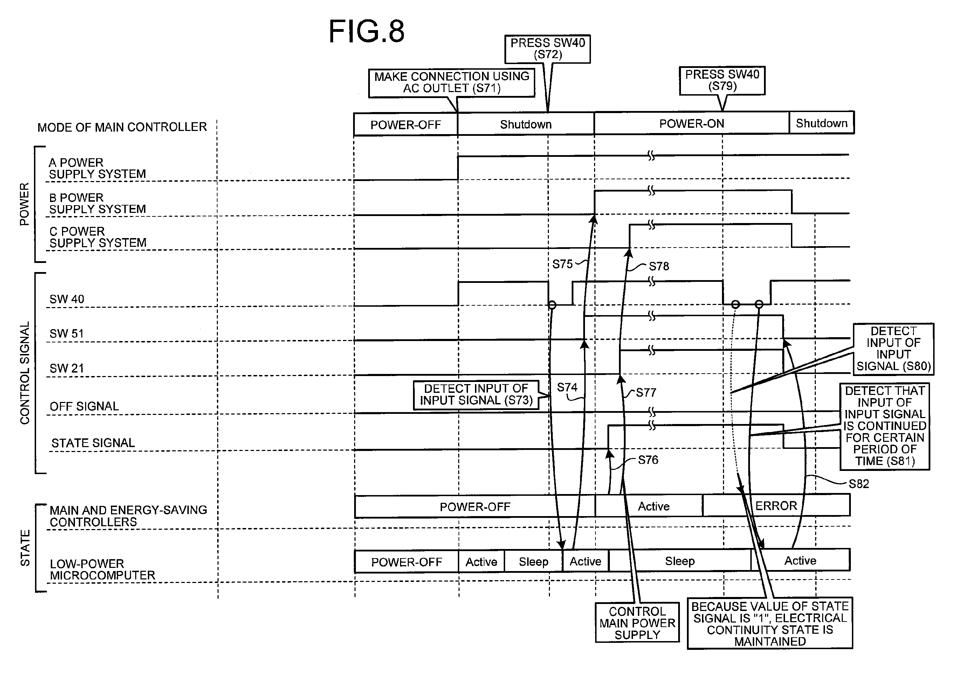

An explanation will be made of a processing operation performed when the switch SW51 shifts from the electrical discontinuity state to the electrical continuity state, the energy-saving controller 55 normally starts, an error occurs in the energy-saving controller 55, and the energy-saving controller 55 fails to change the state signal from "1" to "0" with reference to Fig. 8. Fig. 8 is a sequence diagram of an example of the processing operation performed by the main controller 30 in this case. Because the contents from S71 to S78 in Fig. 8 are the same as those from S21 to S28 in Fig. 5, detailed explanations thereof will be omitted. In the example of Fig. 8, after the switch SW51 shifts from the electrical discontinuity state to the electrical continuity state and the energy-saving controller normally starts (after S78 in Fig. 8), an error occurs in the energy-saving controller 55. However, because the energy-saving controller 55 fails to change the value of the state signal from "1" to "0", the value of the state signal remains to be "1". Subsequently, if the main power supply switch SW40 is pressed (S79), an input signal generated by the pressing of the main power supply switch SW40 is input to the energy-saving controller 55 and the low-power microcomputer 57. Even if the low-power microcomputer 57 detects input of the input signal (S80), the value of the state signal remains to be "1", whereby the switch SW51 maintains the electrical continuity state. If the low-power microcomputer 57 detects that input of the input signal is continued for a certain period of time (S81), the low-power microcomputer 57 controls the switch SW51 so as to achieve the electrical discontinuity state (S82). As a result, the "B power supply system" is turned OFF. Furthermore, because power supply to the energy-saving controller 55 is stopped, the switch SW21 and the relay 18 are turned OFF, and the "C power supply system" is turned OFF. Thus, the main controller 30 shifts from the "power-ON" mode to the "shutdown" mode.

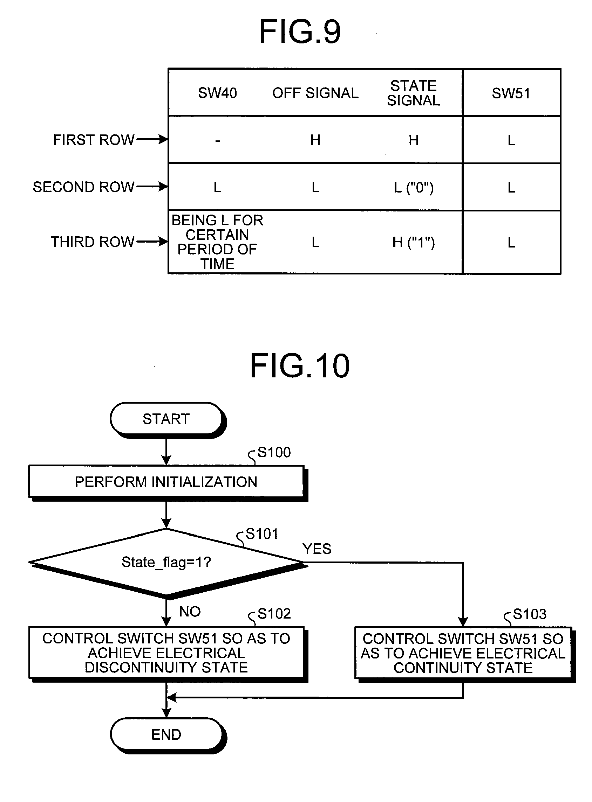

Fig. 9 illustrates a truth table of the cases where the low-power microcomputer 57 controls the switch SW51 so as to achieve the electrical discontinuity state (where the switch SW51 is changed to a low level (L)). In the truth table of Fig. 9, the first row corresponds to the example of Fig. 5, the second row corresponds to the examples of Fig. 6 and Fig. 7, and the third row corresponds to the example of Fig. 8. The case where the low-power microcomputer 57 controls the switch SW51 so as to achieve the electrical continuity state (where the switch SW51 is changed to a high level (H)) corresponds to the case where input of an input signal (an example of the return factor) is detected in the electrical discontinuity state.

### Third embodiment

A third embodiment of the present invention will now be described. In the present embodiment, further provided is a storage unit (not illustrated) that stores therein control information indicating whether the current control state of a switch SW51 is the electrical continuity state or the electrical discontinuity state. If a main controller 30 shifts to the "power-OFF" mode because of a power failure, for example, connection using an AC outlet is made, and the "A power supply system" is turned ON, the third embodiment is different from the first and the second embodiments in that a low-power microcomputer 57 controls the switch SW51 in accordance with the control information stored in the storage unit. Specific contents will be described below. Components common to the first and the second embodiments are denoted by similar reference numerals, and explanations thereof will be omitted as appropriate.

In the present embodiment, if the current control state of the switch SW51 is the electrical continuity state, the low-power microcomputer 57 sets the value of state_flag (control information) to "1" and writes the value to the storage unit. By contrast, if the current control state of the switch SW51 is the electrical discontinuity state, the low-power microcomputer 57 sets the value of state_flag (control information) to "0" and writes the value to the storage unit. However, the method for writing the value is not limited thereto. If the current control state of the switch SW51 is the electrical continuity state, the low-power microcomputer 57 may set the value of state_flag to "0" and write the value to the storage unit. By contrast, if the current control state of the switch SW51 is the electrical discontinuity state, the low-power microcomputer 57 may set the value of state_flag to "1" and write the value to the storage unit. In other words, if the current control state of the switch SW51 is the electrical continuity state, the low-power microcomputer 57 simply needs to set the value of state_flag to a value indicating that the switch SW51 is in the electrical continuity state and write the value to the storage unit. By contrast, if the current control state of the switch SW51 is the electrical discontinuity state, the low-power microcomputer 57 simply needs to set the value of state_flag to a value indicating that the switch SW51 is in the electrical discontinuity state and write the value to the storage unit. The storage unit to which state_flag is written may be provided to the low-power microcomputer 57, a ROM 52, or a RAM 53. In other words, the storage unit to which state_flag is written simply needs to be provided to the main controller 30.

Fig. 10 is a flowchart of an example of a processing operation performed by the low-power microcomputer 57 when connection using the AC outlet is made and the "A power supply system" is turned ON. As illustrated in Fig. 10, if the "A power supply system" is turned ON (if power supply to the low-power microcomputer 57 is started), the low-power microcomputer 57 performs initialization such as setting of a clock (Step S100). The low-power microcomputer 57 then refers to state_flag stored in the storage unit, which is not illustrated, and determines whether the value of state_flag is "1" (Step S101). If it is determined that the value of state_flag is not "1" (No at Step S101), that is, if it is determined that the value of state_flag is "0", the low-power microcomputer 57 controls the switch SW51 so as to achieve the electrical discontinuity state and finishes the processing. More specifically, the low-power microcomputer 57 turns OFF the switch SW51 and finishes the processing. By contrast, if it is determined that the value of state_flag is "1" (Yes at Step S10), the low-power microcomputer 57 controls the switch SW51 so as to achieve the electrical continuity state and finishes the processing. More specifically, the low-power microcomputer 57 turns ON the switch SW51 and finishes the processing.

As described above, in the present embodiment, the low-power microcomputer 57 writes control information corresponding to the current control state of the switch SW51 to the storage unit. If the "A power supply system" is turned ON after power supply to the low-power microcomputer 57 is stopped, the low-power microcomputer 57 controls the switch SW51 in accordance with the control information stored in the storage unit. As a result, even if power supply to the low-power microcomputer 57 is unintentionally stopped because of a power failure, for example, the control state of the switch SW51 after the restoration can be advantageously returned to the control state just before the power failure.

### Modifications

While the embodiments of the present invention have been described above, the embodiments are not intended to limit the present invention. Various modifications can be made without departing from the spirit and scope of the present invention. The embodiments can be arbitrarily combined, for example.

The main controller 30 according to the embodiments corresponds to the control device of the present invention, and the image forming apparatus (100, 200) according to the embodiments corresponds to the electronic apparatus of the present invention. The energy-saving controller 55 according to the embodiments corresponds to a "first control unit" in the claims, and the low-power microcomputer 57 according to the embodiments corresponds to a "second control unit" in the claims.

The control program executed in the main controller 30 according to the embodiments may be provided in a manner recorded in a computer-readable recording medium, such as a compact disk read-only memory (CD-ROM), a flexible disk (FD), a compact disk recordable (CD-R), and a digital versatile disk (DVD), as a file in an installable or executable format.

The control program executed in the main controller 30 according to the embodiments may be provided in a manner stored in a computer connected to a network such as the Internet to be made available for downloads via the network. Furthermore, the control program executed in the main controller 30 according to the embodiments may be provided or distributed over a network such as the Internet.

According to each of the embodiments of the present invention, it is possible to provide a control device and an electronic apparatus that can realize further reduction in power consumption.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

The present application claims priority to and incorporates by reference the entire contents of Japanese Patent Application No. 2011-269023 filed in Japan on December 8, 2011.

## Claims

1. A control device comprising:
a first control unit (55) configured to control supply and stop of electric power from a power supply to a processing unit (10) that performs processing;
a switching unit configured to switch to an electrical continuity state or an electrical discontinuity state between a power supply wire to which the electric power from the power supply is supplied and the first control unit; and
a second control unit (57) configured to control, when the first control unit stops power supply from the power supply to the processing unit, the switching unit so as to achieve the electrical discontinuity state and, when a return factor indicating a factor to return to the electrical continuity state is input in the electrical discontinuity state, to control the switching unit so as to make the electrical continuity state.

2. The control device according to claim 1, wherein
the first control unit (55) sets, when the electrical discontinuity state is switched to the electrical continuity state and the first control unit (55) normally starts, a value of a state signal indicating a state of the first control unit to a first value indicating that the first control unit normally starts, and
the second control unit (57) maintains, when the state signal is set to the first value, the electrical continuity state as long as the first control unit (55) does not stop power supply from the power supply to the processing unit (10).

3. The control device according to claim 2, wherein the second control unit (57) controls, when the second control unit (57) controls the switching unit so as to make the electrical continuity state, the state signal is set to a value different from the first value, and a stop signal requesting to stop power supply from the power supply to the first control unit (55) is input, the switching unit so as to achieve the electrical discontinuity state.

4. The control device according to claim 3, wherein the first control unit (55) sets, when the first control unit (55) normally starts and then an error occurs therein, the value of the state signal to a value different from the first value.

5. The control device according to claim 2, wherein the second control unit (57) controls, when the state signal is set to the first value and input of a stop signal requesting to stop power supply from the power supply to the first control unit (55) is continued for a certain period of time, the switching unit so as to achieve the electrical discontinuity state.

6. The control device according to claim 1, further comprising:
a storage unit configured to store therein control information indicating whether a current control state of the switching unit is the electrical continuity state or the electrical discontinuity state, wherein
the second control unit (57) controls, when power supply from the power supply to the second control unit (57) is stopped and then power supply to the second control unit (57) is resumed, the switching unit in accordance with the control information.

7. An electronic apparatus comprising the control device (30) according to any one of claims 1 to 6.

8. An image forming apparatus including an image forming unit (10) configured to form an image on a medium and a control device (30) according to any one of claims 1 to 6 configured to control power supply to the image forming unit (10).
